# EUROPEAN PATENT APPLICATION

(11) **EP 4 064 402 A2**
(43) Date of publication of application: **28.09.2022**
(21) Application number: 22162595.7
(22) Date of filing: 16.03.2022
(51) Int. Cl.: H01M 10/04, H01M 10/0525, H01M 50/528, H01M 50/533, H01M 50/538, H01M 50/547

(54) **BATTERY CELL, BATTERY, AND ELECTRONIC DEVICE**

(30) Priority: 26.03.2021 CN 202120624743 U
(71) Applicant: Ningde Amperex Technology Ltd., Ningde City, Fujian 352100 (CN)
(72) Inventor: ZHI, Ying, Ningde, 352100 (CN)
(74) Representative: Icosa

(57) **Abstract**

A battery cell (100) includes an electrode assembly (20), a tab, a packaging bag (10), a conductive piece (40) and a plurality of bonding pieces (50). Both the tab and the plurality of bonding pieces (50) are accommodated in the packaging bag (10). The tab includes a plurality of tab units (30). The plurality of tab units (30) are stacked. A first end of each of the plurality of tab units (30) is electrically connected to the electrode assembly (20). A second end of each of the plurality of tab units (30) is connected to the conductive piece (40). The conductive piece (40) protrudes from the packaging bag (10). At least one of the bonding pieces (50) is configured to bond between two adjacent of the plurality of tab units (50).

## Description

### TECHNICAL FIELD

This application relates to the technical field of energy storage devices, and in particular, to a battery cell, a battery, and an electronic device.

### BACKGROUND

In an coating process of an electrode plate, the coating process may cause the edge of the electrode plate to be relatively thin, and cause the head position of a finished battery cell to be relatively thin. Consequently, the force exerted on the battery cell is uneven in a formation process, and the head position of the battery cell expands greatly during cycles, and is at risk of being too thick. In addition, after a tab of the battery cell breaks off, the tab comes into contact with other active substances or materials, tending to cause a short circuit.

### SUMMARY

An objective of this application is to provide a battery cell, a battery, and an electronic device to limit expansion of a head position of a battery cell and reduce the risk of short circuit caused by breakage of a tab.

To achieve the foregoing objective, an embodiment of this application provides a battery cell, including an electrode assembly, a tab, a packaging bag, and a conductive piece. Both the electrode assembly and the tab are accommodated in the packaging bag. The tab includes a plurality of tab units. The plurality of tab units are stacked. A first end of each of the plurality of tab units is electrically connected to the electrode assembly. A second end of each of the plurality of tab units is connected to the conductive piece. The conductive piece protrudes from the packaging bag.

The battery cell includes a plurality of bonding pieces. The plurality of bonding pieces are accommodated in the packaging bag. At least one of the bonding pieces are configured to bond between two adjacent of the plurality of tab units.

With the plurality of bonding pieces disposed, two adjacent of the plurality of tab units may be bonded together to limit the head position of the battery cell and hinder the battery cell from expanding to an excessive size at the head position during cycles. In addition, this may also reduce the risk of tab breakage and the risk of a short circuit caused by the tab breakage.

In some embodiments, the plurality of tab units include a connecting section and a collecting section connected to the connecting section. The plurality of bonding pieces are disposed on the connecting section. The connecting section is connected to the electrode assembly. The collecting section is connected to the conductive piece.

The collecting section may make the tab occupy a smaller space in the battery cell, and improve the space efficiency of the battery cell.

In some embodiments, along a width direction of the plurality of tab units, at least one of the bonding pieces protrudes from both sides of a corresponding tab unit.

In some embodiments, along a width direction of the plurality of tab units, a range of a distance c between two ends of one of the plurality of bonding pieces is: 4 mm ≤ c ≤ 15 mm.

In some embodiments, along a length direction of the plurality of tab units, a range of a length b of one of the plurality of bonding pieces is: 0.5 mm ≤ b ≤ 1.5 mm.

In some embodiments, along a thickness direction of the plurality of tab units, a range of a thickness d of one of the plurality of bonding pieces is: 25 µm ≤ d ≤ 50 µm.

In some embodiments, a gap is provided between one of the plurality of bonding pieces and the electrode assembly to hinder the bonding pieces from increasing the thickness of the electrode assembly and from affecting the energy density of the battery cell.

In some embodiments, the plurality of the bonding pieces are disposed around the plurality of tab units.

In some embodiments, the electrode assembly includes a first electrode plate, a separator, and a second electrode plate. The conductive piece includes a first conductive piece and a second conductive piece. The plurality of tab units include a plurality of first tab units and a plurality of second tab units. A first end of each of the plurality of first tab units is connected to the first electrode plate. A second end of each of the plurality of first tab units is connected to the first conductive piece. The first conductive piece protrudes from the packaging bag. A first end of each of the second tab units is connected to the second electrode plate. A second end of each of the second tab units is connected to the second conductive piece. The second conductive piece protrudes from the packaging bag.

The plurality of bonding pieces include a plurality of first bonding pieces and a plurality of second bonding pieces. At least one of the first bonding pieces is configured to bond between two adjacent of the plurality of first tab units, and at least one of the second bonding pieces is configured to bond between two adjacent of the plurality of second tab units.

In some embodiments, the first electrode plate, the separator, and the second electrode plate are sequentially stacked and wound into a jelly-roll structure. The plurality of first tab units are stacked, and the plurality of second tab units are stacked.

In some embodiments, the electrode assembly comprises a plurality of first electrode plates, a plurality of separators, and a plurality of second electrode plates. The plurality of first electrode plates, the plurality of separators, and the plurality of second electrode plates are alternately stacked. One of the first tab units is connected to one of the plurality of first electrode plates. One of the second tab units is connected to one of the plurality of second electrode plates. The plurality of first tab units are stacked, and the plurality of second tab units are stacked.

In some embodiments, each of the first bonding pieces is adhesive bar, the plurality of first bonding pieces are integrally formed to make a first adhesive strip. A range of a vertical distance e from the first adhesive strip to a side of the collecting section and away from the connecting section is: 0.5 mm ≤ e ≤ 1.5 mm.

In some embodiments, each of the first bonding pieces is adhesive dot, and each of the first bonding pieces bonds to two opposite surfaces of one of the first tab units, so as to bond two adjacent of the plurality of first tab units together.

Another embodiment of this application further provides a battery, including the battery cell.

Another embodiment of this application further provides an electronic device, including the battery and a load. The battery is configured to supply power to the load.

Beneficial effects: In the battery cell, the battery, and the electronic device according to the embodiments of this application, at least one of the bonding pieces is disposed to bond two adjacent of the plurality of tab units to limit the head position of the battery cell and hinder the battery cell from expanding to an excessive size during cycles. In addition, the two adjacent of the plurality of tab units are bonded by one of the bonding pieces, thereby reducing the risk of a short circuit caused by breakage of the tab units.

### BRIEF DESCRIPTION OF DRAWINGS

One or more embodiments are described exemplarily with reference to accompanying drawings corresponding to the embodiments. The exemplary description does not constitute any limitation on the embodiments. Components marked with the same reference numeral in the drawings represent similar components. Unless otherwise specified, the drawings do not constitute any scale limitation.
FIG. 1 is a schematic plan view of a battery cell according to an embodiment of this application;
FIG. 2 is a schematic plan view of the battery cell shown in FIG. 1 without a packaging bag;
FIG. 3 is a schematic expanded plan view of an electrode assembly in the battery cell shown in FIG. 2;
FIG. 4 is a partial enlarged view of connection between a first electrode plate and first tab units in the electrode assembly shown in FIG. 3; and
FIG. 5 is a side view of FIG. 4.

### DETAILED DESCRIPTION

For ease of understanding this application, the following describes this application in more detail with reference to drawings and specific embodiments. It needs to be noted that an element referred to herein as "fixed to" or "mounted to" another element may directly exist on the other element, or may be fixed to the other element through one or more intermediate elements. An element referred to herein as "connected to" another element may be connected to the other element directly or through one or more intermediate elements. A direction or a positional relationship indicated by the terms such as "upper", "lower", "in", "out", "vertical", and "horizontal" used herein is a direction or positional relationship based on the illustration in the drawings, and is merely intended for ease or brevity of describing this application, but does not indicate or imply that the indicated device or component must be located in the specified direction or constructed or operated in the specified direction. Therefore, such terms are not to be understood as a limitation on this application. In addition, the terms "first" and "second" are merely used for descriptive purposes, but shall not be construed as indicating or implying relative importance.

Unless otherwise defined, all technical and scientific terms used herein have the same meanings as what is generally understood by a person skilled in the technical field of this application. The terms used in the specification of this application are merely intended to describe specific embodiments but not to limit this application. The term "and/or" used herein is intended to include any and all combinations of one or more related items preceding and following the term.

In addition, the technical features described below and mentioned in different embodiments of this application may be combined with each other so long as they do not conflict with each other.

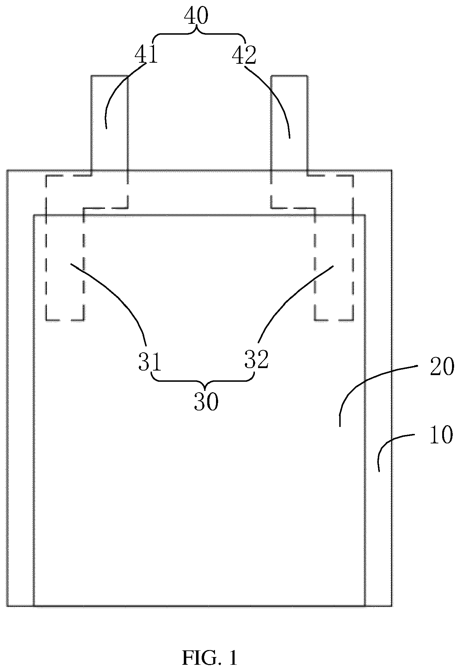

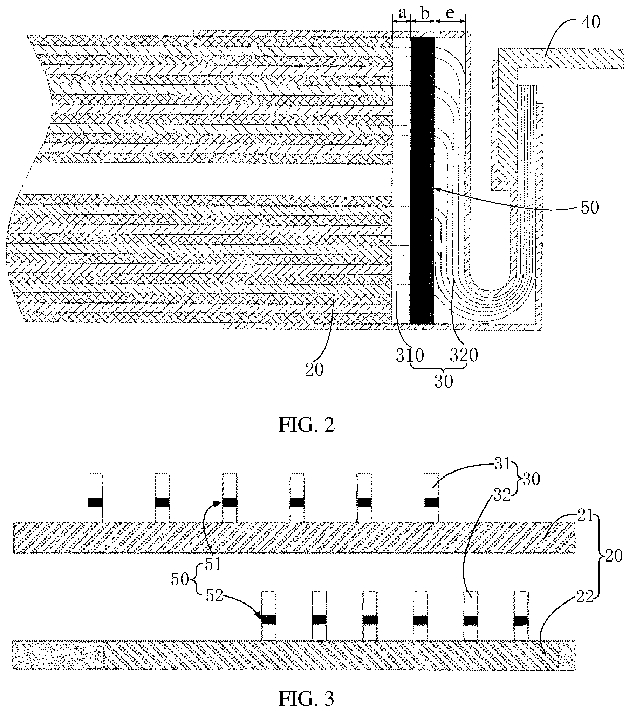

Referring to FIG. 1 and FIG. 2, FIG. 1 is a schematic plan view of a battery cell 100 according to this application; and FIG. 2 is a schematic plan view of the battery cell 100 without a packaging bag 10. The battery cell 100 includes a packaging bag 10, an electrode assembly 20, a tab, a conductive piece 40, and a plurality of bonding pieces 50. The electrode assembly 20, the tab, and the plurality of bonding pieces 50 are all accommodated in the packaging bag 10. The tab includes a plurality of tab units 30. The plurality of tab units 30 are stacked. A first end of each of the plurality of tab units 30 is electrically connected to the electrode assembly 20. A second end of each of the plurality of tab units 30 is connected to the conductive piece 40. The conductive piece 40 protrudes from the packaging bag 10. At least one of the bonding pieces 50 is configured to bond between two adjacent of the plurality of tab units 30.

With the plurality of bonding pieces 50 disposed, two adjacent of the plurality of tab units 30 may be bonded together to limit the head position of the battery cell 100 and hinder the battery cell 100 from expanding to an excessive size at the head position during cycles. In addition, this may also reduce the risk of tab breakage and the risk of a short circuit caused by the tab breakage.

It needs to be noted that the head position of the battery cell 100 means an end of the electrode assembly 20, where the end is connected to the plurality of tab units 30. Excessive size means that the head position of the battery cell 100 expands and becomes thicker than the specified thickness of the battery cell 100.

In some embodiments, the plurality of bonding pieces 50 may be disposed around the plurality of tab units 30 instead. For example, the plurality of bonding pieces 50 are disposed at a lateral portion of two adjacent of the plurality of tab units 30 to bond the two adjacent of the plurality of tab units 30.

The packaging bag 10 may be an aluminum plastic film.

To downsize the battery cell 100 and improve the space efficiency of the battery cell 100, the plurality of tab units 30 include a connecting section 310 and a collecting section 320 connected to the connecting section 310. The plurality of bonding pieces 50 are disposed on the connecting section 310. The connecting section 310 is connected to the electrode assembly 20. The collecting section 320 is connected to the conductive piece 40.

It needs to be noted that the collecting section 320 may be formed by squeezing and furling the second end of each of the plurality of tab units 30 after the plurality of tab units 30 are stacked and aligned.

In some embodiments, the plurality of tab units 30 further include a bend section. One end of the collecting section 320 is connected to the connecting section 310. The other end of the collecting section 320 is connected to the bend section. The bend section is connected to the conductive piece 40. It needs to be noted that the bend section may be formed by bending the plurality of tab units 30 together after tab units are squeezed and furled.

Understandably, the battery cell 100 may be a stacked cell or a jelly-roll cell.

Referring to FIG. 1 and FIG. 3, the electrode assembly 20 includes a first electrode plate 21, a separator, and a second electrode plate 22. The plurality of tab units 30 include a plurality of first tab units 31 and a plurality of second tab units 32. The conductive piece 40 includes a first conductive piece 41 and a second conductive piece 42.

A first end of each of the plurality of first tab units 31 is connected to the first electrode plate 21. A second end of each of the plurality of first tab units 31 is connected to the first conductive piece 41. The first conductive piece 41 protrudes from the packaging bag 10. A first end of each of the plurality of second tab units 32 is connected to the second electrode plate 22. A second end of each of the plurality of second tab units 32 is connected to the second conductive piece 42. The second conductive piece 42 protrudes from the packaging bag 10.

The plurality of bonding pieces 50 include a plurality of first bonding pieces 51 and a plurality of second bonding pieces 52. At least one of the first bonding pieces 51 is configured to bond between two adjacent of the plurality of first tab units 31, and the second bonding pieces 52 are configured to bond between two adjacent of the plurality of second tab units 32.

Understandably, the polarities of the plurality of first tab units 31 are opposite to the polarities of the plurality of second tab units 32. For example, the plurality of first tab units 31 are positive tabs, and the plurality of second tab units 32 are negative tabs.

When the battery cell 100 is a jelly-roll cell, the plurality of first tab units 31 are disposed on the first electrode plate 21, and the plurality of second tab units 32 are disposed on the second electrode plate 22. The first electrode plate 21, the separator, and the second electrode plate 22 are sequentially stacked and wound into a jelly-roll structure. After winding, the plurality of first tab units 31 are stacked, and the plurality of second tab units 32 are stacked.

When the battery cell 100 is a stacked cell, the electrode assembly comprises a plurality of first electrode plates 21, a plurality of separators, and a plurality of second electrode plates 22. The plurality of first electrode plates 21, the plurality of separators, and the plurality of second electrode plates 22 are alternately stacked. One of the plurality of first tab units 31 is connected to one of the plurality of first electrode plates 21. One of the plurality of second tab units 32 is connected to one of the plurality of second electrode plates 22. After stacking, the plurality of first tab units 31 are stacked, and the plurality of second tab units 32 are stacked.

It needs to be noted that regardless of whether the battery cell 100 is a jelly-roll cell or a stacked cell, both the plurality of first tab units 31 and the plurality of second tab units 32 include the connecting section 310 and the collecting section 320.

Understandably, the bonding pieces 50 may be liquid bonding pieces or non-liquid bonding pieces. If the bonding pieces 50 are liquid bonding pieces, the liquid bonding pieces may be dripped onto the connecting section 310 after the electrode plates are stacked or wound. If the bonding pieces 50 are non-liquid bonding pieces, the bonding pieces 50 may bond to the plurality of tab units before the electrode plates are stacked or wound.

In some embodiments, the bonding pieces 50 are non-liquid bonding pieces. For example, both the first bonding piece 51 and the second bonding piece 52 are adhesive dots. The first bonding piece 51 bonds to two opposite surfaces of one of the plurality of first tab units 31 to bond two adjacent of the plurality of first tab units 31 together. The second bonding piece 52 bonds to two opposite surfaces of one of the plurality of second tab units 32 to bond two adjacent of the plurality of second tab units 32 together.

In some embodiments, the bonding pieces 50 is liquid bonding pieces, and both the first bonding piece 51 and the second bonding piece 52 are adhesive bars. A plurality of first bonding pieces 51 are integrally formed to make a first adhesive strip. A plurality of second bonding pieces 52 are integrally formed to make a second adhesive strip.

Understandably, when the bonding pieces 50 are liquid bonding pieces, a through hole may be provided on the connecting section. In some embodiments, a first through hole is provided at the same position of each of the plurality of first tab units 31, and a second through hole is provided at the same position of each of the plurality of second tab units 32. The first bonding piece 51 is dripped to the first through hole, and the second bonding piece 52 is dripped to the second through hole. The first bonding piece 51 bonds two adjacent of the plurality of first tab units 31 through the first through hole. The second bonding piece 52 bonds two adjacent of the plurality of second tab units 32 through the second through hole.

Understandably, the bonding pieces 50 may bond a part of adjacent tab units, or bond all adjacent tab units. For example, when the bonding pieces 50 bond a part of adjacent tab units, adhesive dots may be affixed to two opposite surfaces of a part of the plurality of first tab units 31. Alternatively, the dosage of the liquid bonding pieces is controlled to hinder the bonding pieces from being dripped onto all of the plurality of first tab units 31. When the bonding pieces 50 bond all adjacent tab units, adhesive dots are affixed to two opposite surfaces of each of the plurality of first tab units 31. Alternatively, the dosage of the liquid bonding pieces is controlled to ensure that the bonding pieces are dripped onto all of the plurality of first tab units.

It needs to be noted that regardless of whether a part of or all of the adjacent tab units are bonded, the head position of the battery cell 100 can be constrained.

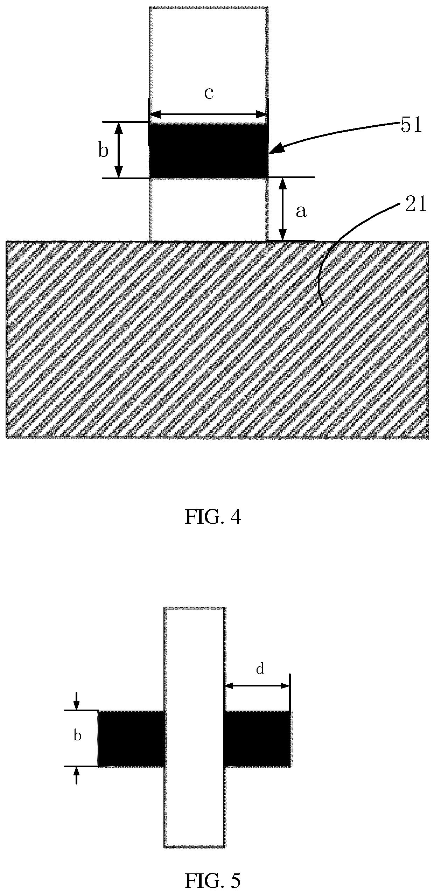

Referring to FIG. 4, in order to mitigate the increased thickness of the electrode assembly 20 caused by the bonding pieces 50, a gap is provided between one of the plurality of bonding pieces 50 and the electrode assembly 20. In some embodiments, the distance a between one of the plurality of first bonding piece 51 and the first electrode plate 21 is greater than 0, and the distance between one of the second bonding piece 52 and the second electrode plate 22 is greater than 0.

Along a width direction of the plurality of tab units 30, at least one of the plurality of bonding pieces 50 protrudes from both sides of a corresponding tab unit. At least one of the plurality of first bonding piece 51 protrudes from both sides of the corresponding first tab unit 31, and at least one of the plurality of second bonding piece 52 protrudes from both sides of the corresponding second tab unit 32.

Understandably, when the plurality of bonding pieces 50 are non-liquid bonding pieces, the plurality of bonding pieces 50 may hinder protruding from both sides of the corresponding tab unit. For example, the plurality of first bonding piece 51 bonds to two opposite surfaces of the plurality of first tab units 31, and the width of the plurality of first bonding piece 51 is less than the width of the plurality of first tab unit 31, as long as the plurality of first bonding piece 51 can bond together the two first tab units 31 adjacent to the first bonding piece. The structures of the plurality of second bonding piece 52 are similar to the structures of the plurality of first bonding piece 51, and are not described in detail here.

Along a length direction of the plurality of first tab units 31, the range of the length b of one of the plurality of first bonding piece 51 is: 0.5 mm ≤ b ≤ 1.5 mm.

Along a width direction of the plurality of first tab units 31, the range of the distance c between two ends of one of the plurality of first bonding piece is: 4 mm ≤ c ≤ 15 mm.

Along a thickness direction of the plurality of first tab units 31, the thickness d of one of the first plurality of bonding piece 51 is adjusted adaptively depending on the thickness of the first electrode plate 21, and the range of the thickness d of one of the plurality of first bonding piece 51 is: 25 µm ≤ d ≤ 50 µm.

When the plurality of bonding pieces 50 are liquid bonding pieces, the range of the vertical distance e from the first adhesive strip to a side of the collecting section 320 and away from the connecting section 310 is: 0.5 mm ≤ e ≤ 1.5 mm.

The structures of the plurality of second bonding piece 52 are similar to the structures of the plurality of first bonding piece 51, and are not described in detail here.

This application further provides a battery, including the battery cell 100.

This application further provides an electronic device, including the battery and a load. The battery is configured to supply power to the load.

The electronic device may be an electronic vehicle, a sweeping robot, a mobile phone, a tablet, or the like.

In the battery cell, the battery, and the electronic device according to this application, the plurality of bonding pieces 50 are disposed to bond two adjacent of the plurality of tab units to limit the head position of the battery cell and hinder the battery cell 100 from expanding to an excessive size during cycles. In addition, the two adjacent of the plurality of tab units are bonded by the bonding pieces, thereby reducing the risk of a short circuit caused by breakage of the tab units.

What is described above is merely embodiments of this application, and is not intended to limit the patent scope of this application. All equivalent structural variations and equivalent process variations made by using the specification and the drawings of this application, and the direct and indirect use of the essence hereof in other related technical fields, fall within the patent protection scope of this application as well.

## Claims

1. A battery cell (100), comprising: an electrode assembly (20), a tab, a packaging bag (10) and a conductive piece (40), wherein both the electrode assembly (20) and the tab are accommodated in the packaging bag (10), the tab comprises a plurality of tab units (30), the plurality of tab units (30) are stacked, a first end of each of the plurality of tab units (30) is electrically connected to the electrode assembly (20), a second end of each of the plurality of tab units (30) is connected to the conductive piece (40), and the conductive piece (40) protrudes from the packaging bag (10); **characterized in that**,
the battery cell (100) comprises a plurality of bonding pieces (50), wherein the plurality of bonding pieces (50) are accommodated in the packaging bag (10), and at least one of the bonding pieces (50) is configured to bond between two adjacent of the plurality of tab units (30).

2. The battery cell (100) according to claim 1, **characterized in that**,
the plurality of tab units (30) comprise a connecting section (310) and a collecting section (320) connected to the connecting section (310), the plurality of bonding pieces (50) are disposed on the connecting section (310), the connecting section (310) is connected to the electrode assembly (20), and the collecting section (320) is connected to the conductive piece (40).

3. The battery cell (100) according to claim 2, **characterized in that**,
along a width direction of the plurality of tab units (30), at least one of the plurality of bonding pieces (50) protrudes from both sides of a corresponding tab unit (30).

4. The battery cell (100) according to claim 2, **characterized in that**,
along a width direction of the plurality of tab units (30), a range of a distance c between two ends of one of the plurality of bonding pieces (50) is: 4 mm ≤ c ≤ 15 mm.

5. The battery cell (100) according to claim 2, **characterized in that**,
along a length direction of the plurality of tab units (30), a range of a length b of one of the plurality of bonding pieces (50) is: 0.5 mm ≤ b ≤ 1.5 mm.

6. The battery cell (100) according to claim 2, **characterized in that**,
along a thickness direction of the plurality of tab units (30), a range of a thickness d of one of the plurality of bonding pieces (50) is: 25 µm ≤ d ≤ 50 µm.

7. The battery cell (100) according to claim 1, **characterized in that**, a gap is provided between one of the plurality of bonding pieces (50) and the electrode assembly (20).

8. The battery cell (100) according to claim 1, **characterized in that**, the plurality of the bonding pieces (50) are disposed around the plurality of tab units (30).

9. The battery cell (100) according to any one of claims 2 to 8, **characterized in that**,
the electrode assembly (20) comprises a first electrode plate (21), a separator, and a second electrode plate (22);
the conductive piece (40) comprises a first conductive piece (41) and a second conductive piece (42);
the plurality of tab units (30) comprise a plurality of first tab units (31) and a plurality of second tab units (32), a first end of each of the plurality of first tab units (31) is connected to the first electrode plate (21), a second end of each of the plurality of first tab units (31) is connected to the first conductive piece (41), the first conductive piece (41) protrudes from the packaging bag (10), a first end of each of the plurality of second tab units (32) is connected to the second electrode plate (22), a second end of each of the plurality of second tab units (32) is connected to the second conductive piece (42), and the second conductive piece (42) protrudes from the packaging bag (10); and
the plurality of bonding pieces (50) comprise a plurality of first bonding pieces (51) and a plurality of second bonding pieces (52), at least one of the first bonding pieces (51) is configured to bond between two adjacent of the plurality of first tab units (31), and at least one of the second bonding pieces (52) is configured to bond between two adjacent of the plurality of second tab units (32).

10. The battery cell (100) according to claim 9, **characterized in that**, the first electrode plate (21), the separator, and the second electrode plate (22) are sequentially stacked and wound into a jelly-roll structure, and the plurality of first tab units (31) are stacked, and the plurality of second tab units (32) are stacked.

11. The battery cell (100) according to claim 9, **characterized in that**, the electrode assembly comprises a plurality of first electrode plates (21), a plurality of separators, and a plurality of second electrode plates (22); and the plurality of first electrode plates (21), the plurality of separators, and the plurality of second electrode plates (22) are alternately stacked; one of the first tab units (31) is connected to one of the plurality of first electrode plates (21), one of the second tab units (32) is connected to one of the plurality of second electrode plates (22), and the plurality of first tab units (31) are stacked, and the plurality of second tab units (32) are stacked.

12. The battery cell (100) according to claim 9, **characterized in that**,
each of the first bonding pieces (51) is adhesive bar, the plurality of first bonding pieces (51) are integrally formed to make a first adhesive strip, and a range of a vertical distance e from the first adhesive strip to a side of the collecting section (320) away from the connecting section (310) is: 0.5 mm ≤ e ≤ 1.5 mm.

13. The battery cell (100) according to claim 9, **characterized in that**,
each of the first bonding pieces (51) is adhesive dot, and each of the first bonding pieces (51) bonds to two opposite surfaces of one of the first tab units (31), so as to bond two adjacent of the plurality of first tab units (31) together.

14. A battery, **characterized in that**, the battery comprises the battery cell (100) according to any one of claims 1 to 13.

15. An electronic device, **characterized in that**, the electronic device comprises the battery according to claim 14; and
a load, wherein the battery is configured to supply power to the load.
